# EUROPEAN PATENT APPLICATION

(11) **EP 4 813 689 A1**
(43) Date of publication of application: **30.09.2026**
(21) Application number: 26154956.2
(22) Date of filing: 29.01.2026
(51) Int. Cl.: B60K 1/04

(54) **VEHICLE UNDERBODY STRUCTURE**

(30) Priority: 26.03.2025 JP 2025052176
(71) Applicant: Toyota Jidosha Kabushiki Kaisha, Toyota-shi, Aichi-ken 471-8571 (JP)
(72) Inventor: TAKAHASHI, Isao, TOYOTA-SHI, AICHI-KEN, 471-8571 (JP); YAMAMOTO, Yo, TOYOTA-SHI, AICHI-KEN, 471-8571 (JP)
(74) Representative: Cabinet Beau de Loménie

(57) **Abstract**

A flange (25) of a lower case (24) is formed with a stepped portion (32) that protrudes downward in the vehicle up-down direction and that defines a step (H1) together with the flange (25). A flange (27) of an upper cover (26) is formed with a stepped portion (34) that protrudes upward in the vehicle up-down direction and that defines a step (H2) together with the flange (27). An adhesive (31) is retained between the stepped portion (32) of the lower case (24) and the stepped portion (34) of the upper cover (26). Accordingly, compared with a configuration in which flat surfaces are bonded together, spreading of the adhesive (31) is further suppressed and the adhesive (31) is more reliably retained at a predetermined location, thereby further improving the joining strength provided by the adhesive (31).

## Description

### BACKGROUND OF THE INVENTION

### 1. Field of the Invention

The present invention relates to vehicle underbody structures.

### 2. Description of Related Art

Japanese Unexamined Patent Application Publication No. 2022-103661 (JP 2022-103661 A) discloses technology related to a sealing structure of a battery pack mounted on a vehicle. In this related art, flanges are formed along the peripheries of a lower case and an upper cover that constitute the battery pack, and the flanges of the lower case and the upper cover are joined to each other via a sealing member.

### SUMMARY OF THE INVENTION

In the above related art, each of the lower case and the upper cover is provided with a flange, and these flanges are bonded together via an adhesive. However, there is still room for improvement in terms of increasing the joining strength between the lower case and the upper cover.

In view of the foregoing, an object of the present invention is to provide a vehicle underbody structure that can further improve the joining strength between a lower case and an upper cover.

A vehicle underbody structure of a first aspect includes a battery case mounted on a lower portion of a vehicle. The battery case includes: a lower case that has a housing portion in which a battery module is accommodated; and an upper cover that is joined to the lower case and closes the housing portion. The lower case includes a first flange provided at an outer edge of the lower case and extending in a direction toward the outside of the housing portion. The upper cover includes a second flange provided at an outer edge of the upper cover and extending in a direction toward the outside of the housing portion. The second flange is joined to the first flange via a joining region. A protrusion configured to retain an adhesive at the joining region is provided on either or both of the first flange and the second flange. The protrusion extends in a direction away from the housing portion along a vehicle up-down direction.

In the vehicle underbody structure of the first aspect, the battery case mounted on the lower portion of the vehicle includes the lower case and the upper cover. The lower case and the upper cover form the housing portion in which the battery module is accommodated. The upper cover is joined to the lower case, and the housing portion is thus closed.

The first flange is provided at the outer edge of the lower case, and the first flange extends in a direction toward the outside of the housing portion. The second flange is provided at the outer edge of the upper cover. The second flange extends in a direction toward the outside of the housing portion, and is joined to the first flange via the joining region.

In this aspect, the protrusion is provided on either or both of the first flange and the second flange. The protrusion extends in a direction away from the housing portion along the vehicle up-down direction, and is configured to retain the adhesive at the joining region. In this aspect, the adhesive is thus retained on the protrusion. Accordingly, compared with a configuration in which flat surfaces are bonded together, spreading of the adhesive is further suppressed and the adhesive is more reliably retained at a predetermined location, thereby improving the joining strength provided by the adhesive.

According to a vehicle underbody structure of a second aspect, in the vehicle underbody structure of the first aspect, the protrusion is provided on the lower case as a first stepped portion protruding downward in the vehicle up-down direction and defining a first step between the first stepped portion and the first flange.

In the vehicle underbody structure of the second aspect, the protrusion is the first stepped portion provided on the lower case, and the first stepped portion protrudes downward in the vehicle up-down direction, and defines the first step together with the first flange portion. Since the protrusion (the first stepped portion) that retains the adhesive is provided on the lower case, the position of the adhesive can be visually checked and adjusted during assembly.

According to a vehicle underbody structure of a third aspect, in the vehicle underbody structure of the first or second aspect, the protrusion is provided on the upper cover as a second stepped portion that is provided at a position facing the first stepped portion. The second stepped portion protrudes upward in the vehicle up-down direction and defines a second step between the second stepped portion and the second flange.

In the vehicle underbody structure of the third aspect, the protrusion is the second stepped portion provided on the upper cover. The second stepped portion is provided at a position facing the first stepped portion of the lower case. The second stepped portion protrudes upward in the vehicle up-down direction and defines the second step together with the second flange.

In this aspect, the adhesive is retained between the first stepped portion and the second stepped portion. Accordingly, compared with a configuration in which flat surfaces are bonded together, spreading of the adhesive is further suppressed and the adhesive is more reliably retained at a predetermined location, thereby further improving the joining strength provided by the adhesive.

According to a vehicle underbody structure of a fourth aspect, in the vehicle underbody structure of any one of the first to third aspects, the second step is larger than the first step.

In the vehicle underbody structure of the fourth aspect, the second step defined by the second stepped portion of the upper cover is larger than the first step defined by the first stepped portion of the lower case. To join the upper cover to the lower case, the first and second stepped portions are formed such that the second step becomes (deeper) than the first step. This allows the adhesive to be more reliably retained on the second stepped portion.

According to a vehicle underbody structure of a fifth aspect, the vehicle underbody structure of any one of the first to fourth aspects further includes: a first vertical wall portion that is part of the first stepped portion and is provided along the vehicle up-down direction on a side away from the housing portion; and a second vertical wall portion that is part of the second stepped portion and is provided along the vehicle up-down direction on a side away from the housing portion. The second vertical wall portion is located farther away from the housing portion than the first vertical wall portion.

The vehicle underbody structure of the fifth aspect further includes the first vertical wall portion and the second vertical wall portion. The first vertical wall portion is part of the first stepped portion of the upper cover and is provided along the vehicle up-down direction on the side away from the housing portion. The second vertical wall portion is part of the second stepped portion of the lower case and is provided along the vehicle up-down direction on the side away from the housing portion. The second vertical wall portion is located farther away from the housing portion than the first vertical wall portion.

In this aspect, the second vertical wall portion of the upper cover is thus positioned farther away from the housing portion than the first vertical wall portion of the lower case. This can make the bonding area of the second stepped portion larger than that of the first stepped portion. When the upper cover is joined to the lower case during assembly, the adhesive applied to the first stepped portion is pressed against the second stepped portion. Even if the adhesive spreads outward beyond the first stepped portion, the second vertical wall portion of the second stepped portion suppresses such spreading of the adhesive, thereby reducing the likelihood of leakage of the adhesive from the joining region.

As described above, the vehicle underbody structure according to the present invention can further improve the joining strength between the lower case and the upper cover.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic exploded perspective view showing a configuration of a vehicle to which a vehicle underbody structure according to an embodiment is applied;
FIG. 2 is a schematic plan view showing the vehicle underbody structure according to the embodiment;
FIG. 3 is a schematic sectional view of the vehicle underbody structure shown in FIG. 2, taken along the vehicle front-rear direction;
FIG. 4 is a schematic sectional view of the vehicle underbody structure shown in FIG. 2, taken along the vehicle width direction;
FIG. 5 is a schematic sectional view of the vehicle underbody structure shown in FIG. 1, taken along line A-A; and
FIG. 6 is an enlarged sectional view showing region B in FIG. 5.

### DETAILED DESCRIPTION OF EMBODIMENTS

Hereinafter, a vehicle underbody structure according to an embodiment of the present invention will be described with reference to the drawings. Identical or equivalent components are denoted by the same or similar signs throughout the drawings, and repetitive description will be omitted. When multiple identical or equivalent components are included in the drawings, only some of them may be denoted by signs for clarity. In the drawings, arrow FR indicates the forward direction in the vehicle front-rear direction, and arrow UP indicates the upward direction in the vehicle up-down direction. Arrow RH indicates the rightward direction in the vehicle width direction, and in the present embodiment, indicates the outward direction in the vehicle width direction. Hereinafter, the terms "front", "rear", "upper", "lower", "left", and "right" refer to front and rear in the vehicle front-rear direction, upper and lower in the vehicle up-down direction, and left and right in the vehicle left-right direction (vehicle width direction), respectively, unless otherwise specified.

### Configuration of Vehicle Underbody Structure

First, the configuration of a vehicle to which the vehicle underbody structure of the present embodiment is applied will be described.

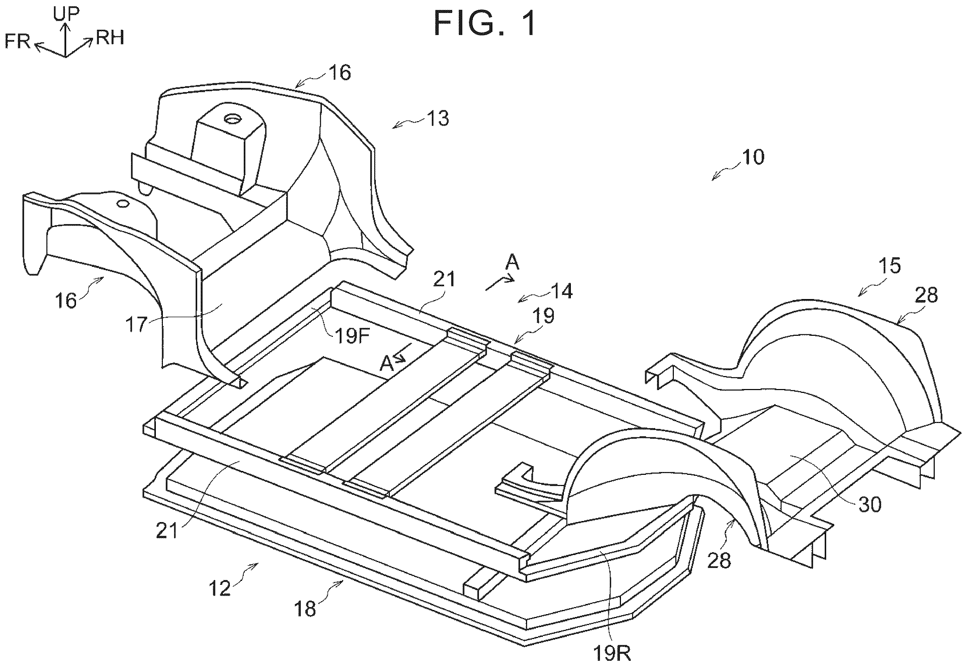

FIG. 1 is an exploded perspective view of a vehicle 10 equipped with a vehicle underbody structure 12 according to the present embodiment. In the present embodiment, the vehicle 10 is divided into a front portion (hereinafter "front module") 13, a central portion ("center module") 14, and a rear portion ("rear module") 15.

For example, the front module 13 includes a pair of right and left wheel arches 16 capable of accommodating wheels (not shown), and a cross member 17 that connects the wheel arches 16. The wheel arches 16 and the cross member 17 are integrally formed (integrated) by die casting using a material such as an aluminum alloy or a magnesium alloy.

The center module 14 includes a battery pack (battery case) 18. The battery pack 18 is made of a light metal such as an aluminum alloy, and has a generally rectangular plate shape with its longitudinal direction extending along the vehicle front-rear direction as viewed in plan. The battery pack 18 is supported by a battery frame 19.

The battery frame 19 has a generally rectangular frame shape with its longitudinal direction extending along the vehicle front-rear direction as viewed in plan. The battery frame 19 includes: a pair of right and left side frames (hereinafter, "rockers") 21 that extend in the vehicle front-rear direction on the outer sides of the battery pack 18 in the vehicle width direction; a front cross member 19F that connects the front ends of the rockers 21; and a rear cross member 19R that connects the rear ends of the rockers 21. These components are integrally formed (integrated) as a single structure.

The battery frame 19 is formed by, for example, extrusion molding using a material such as an aluminum alloy or a magnesium alloy. The configuration of the battery frame 19 may be modified as appropriate according to the shapes of the front module 13 and the rear module 15, and the manufacturing method may also be changed accordingly.

The rear module 15 includes a pair of right and left wheel arches 28 disposed on the outer sides in the vehicle-width direction and capable of accommodating wheels (not shown), and a support member 30 that connects the wheel arches 28 and configured to support a rear seat (not shown). As with the front module 13, the wheel arches 28 and the support member 30 are integrally formed by die casting using a material such as an aluminum alloy or a magnesium alloy.

Next, a main portion of the vehicle underbody structure 12 of the present embodiment will be described.

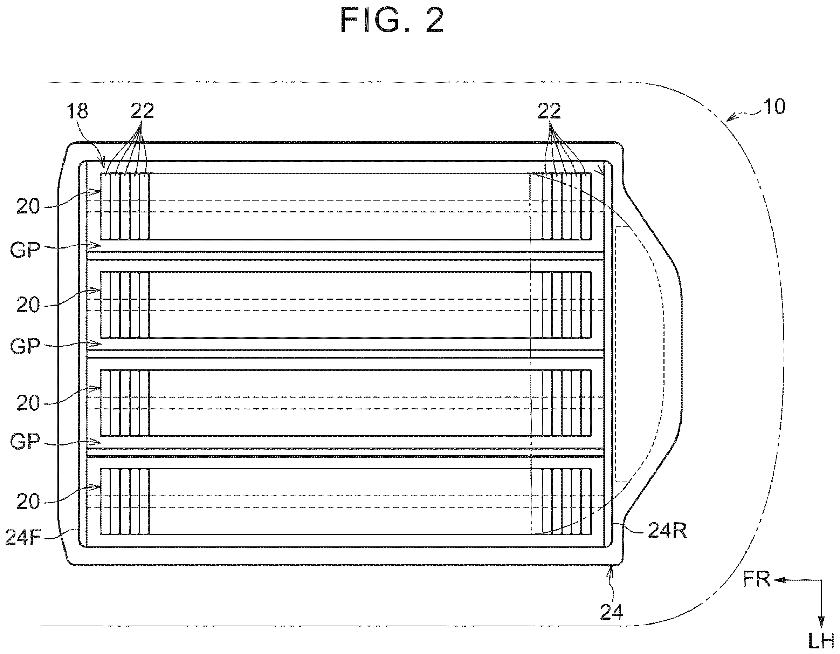

FIG. 2 is a schematic plan view showing a portion of the vehicle 10 equipped with the vehicle underbody structure 12 of the present embodiment. As shown in FIG. 2, the battery pack 18 is mounted on the vehicle 10. The battery pack 18 includes a plurality of (four in the present embodiment) battery modules 20. The battery modules 20 are arranged side by side in the vehicle-width direction. A gap GP is formed between each pair of adjacent battery modules 20. In the present embodiment, since there are four battery modules 20, three gaps GP are formed between the battery modules 20.

Each battery module 20 includes a plurality of battery cells 22. The battery cells 22 are arranged side by side in the vehicle front-rear direction within each battery module 20. That is, the battery pack 18 has a configuration in which multiple battery modules 20, each including multiple battery cells 22 arranged in the vehicle front-rear direction, are arranged side by side in the vehicle-width direction.

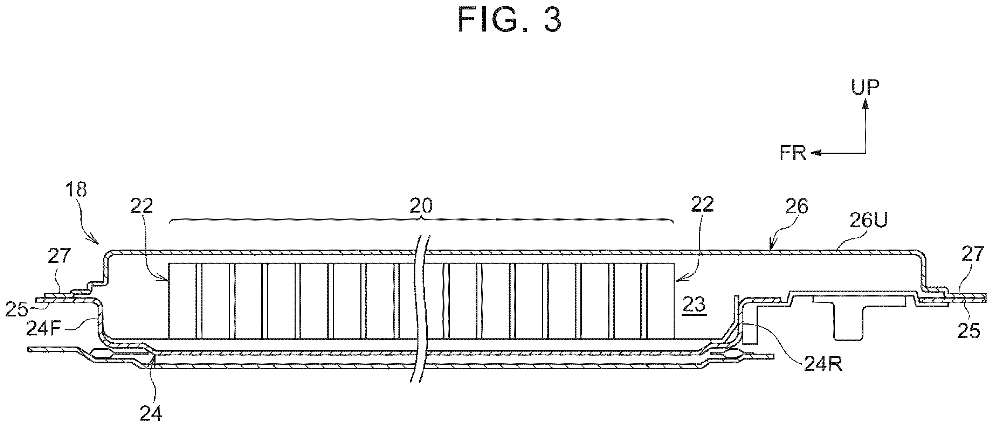

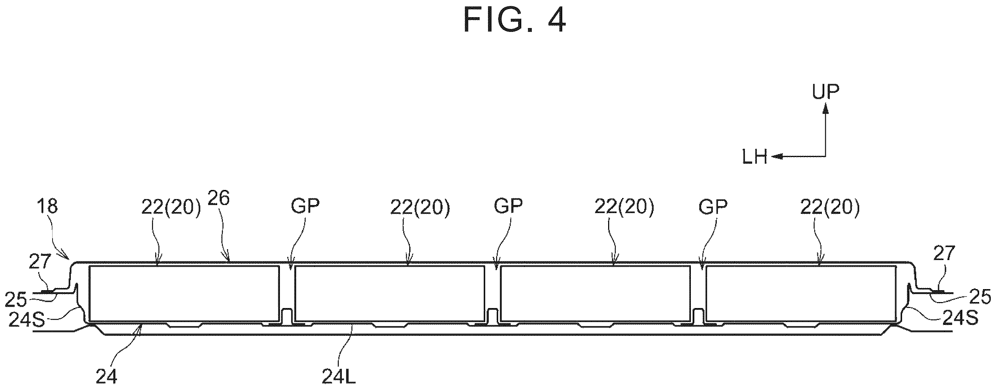

FIG. 3 is a sectional view of the vehicle underbody structure 12 in FIG. 2, taken along the vehicle front-rear direction. FIG. 4 is a sectional view of the vehicle underbody structure 12 of FIG. 2, taken along the vehicle-width direction. As shown in FIGS. 3 and 4, the battery pack 18 includes a lower case 24 and an upper cover 26. In FIG. 2, the upper cover 26 is not shown. In FIG. 4, each of the lower case 24 and the upper cover 26 is shown in a simplified outline form for clarity.

As shown in FIGS. 3 and 4, the battery pack 18 includes the lower case 24 and the upper cover 26. The lower case 24 is a member provided with a box-shaped housing portion 23 capable of accommodating the battery modules 20. The lower case 24 includes a bottom plate 24L, a front plate 24F, a rear plate 24R, and a pair of right and left side plates 24S.

The bottom plate 24L is a plate-shaped portion that supports the battery modules 20 from below. The front plate 24F and the rear plate 24R are plate-shaped portions extending upward from the front and rear ends of the bottom plate 24L, respectively. The side plates 24S are plate-shaped portions extending upward from both sides of the bottom plate 24L in the vehicle-width direction. The upper side of the lower case 24 is open. A flange (first flange) 25 projects from the periphery of the lower case 24 in a direction toward the outside of the housing portion 23.

A shear panel 46 extending in both the vehicle front-rear direction and the vehicle width direction is provided below the battery pack 18. The shear panel 46 is formed of a metal plate such as an aluminum alloy plate or a steel plate. The shear panel 46 is connected to the rockers 21 (see FIG. 1) that extend in the vehicle front-rear direction on the outer sides of the battery pack 18 in the vehicle-width direction and that serve as part of the vehicle body framework. The lower surface of the battery pack 18 is thus covered by the shear panel 46, and the battery modules 20 are protected from road debris and other foreign matter by the shear panel 46.

The upper cover 26 is a lid-like member that covers the upper side of the lower case 24 and forms, together with the lower case 24, the housing portion 23. The upper cover 26 has a configuration similar to that of the lower case 24, and includes a top plate 26U, a front plate 26F, a rear plate 26R, and a pair of right and left side plates 26S. The top plate 26U is a plate-shaped portion that covers the battery modules 20 from above.

The lower side of the upper cover 26 is open. A flange (second flange) 27 projects from the periphery of the upper cover 26 in a direction toward the outside of the housing portion 23. The flange 27 can be joined to the flange 25 of the lower case 24 via a joining region 29 (described later). The lower case 24 and the upper cover 26 together form the battery pack 18.

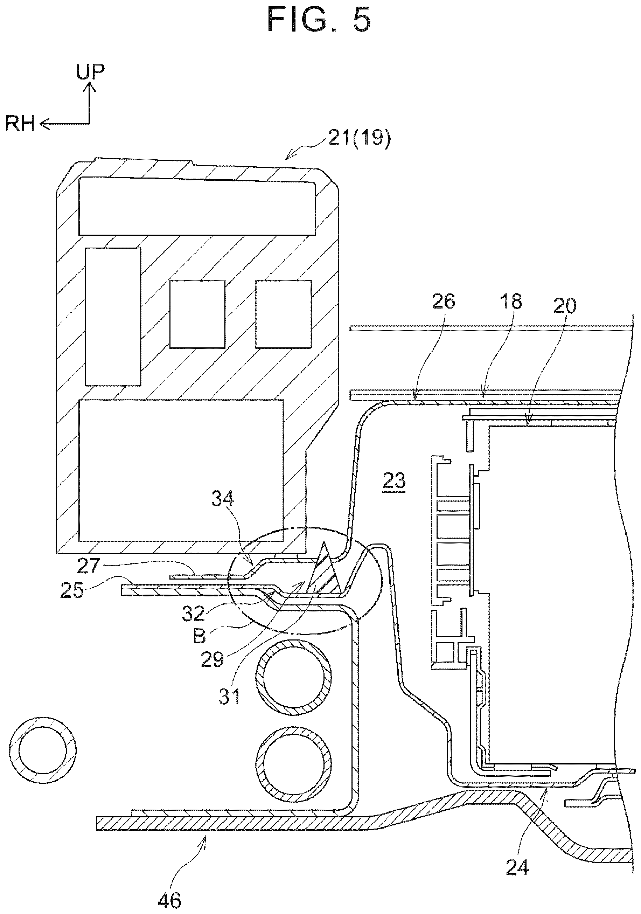

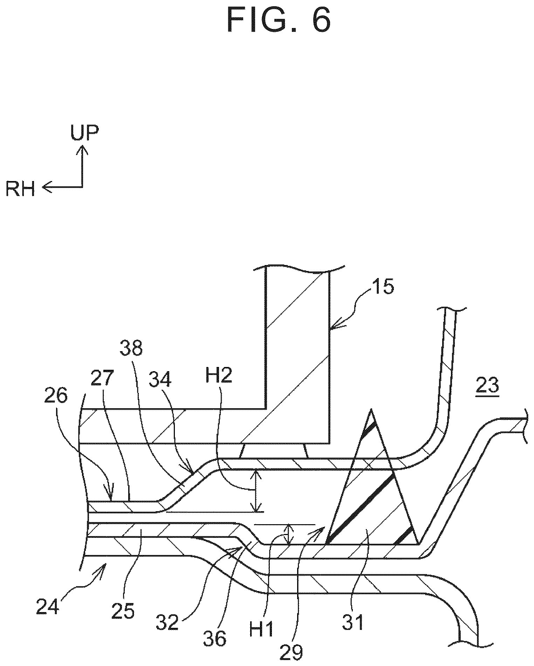

FIG. 5 is a sectional view taken along line A-A in FIG. 1. FIG. 6 is an enlarged sectional view showing region B in FIG. 5.

As shown in FIGS. 5 and 6, the flange 25 of the lower case 24 and the flange 27 of the upper cover 26 are joined to each other via an adhesive 31 at the joining region 29. The flange 25 is formed with a first stepped portion (protrusion) 32 that protrudes downward in the vehicle up-down direction, and a step (first step) H1 is defined between the first stepped portion 32 and the flange 25.

The stepped portion 32 includes a vertical wall portion 36 that is formed along the vehicle up-down direction on the side away from the housing portion 23. A second stepped portion 34 described below includes a vertical wall portion 38 that is formed along the vehicle up-down direction on the side away from the housing portion 23.

The flange 27 of the upper cover 26 is formed with the second stepped portion (protrusion) 34 that protrudes upward in the vehicle up-down direction, and a step (second step) H2 is defined between the second stepped portion 34 and the flange 27.

The stepped portion 34 is formed at a position facing the stepped portion 32 of the lower case 24. The step H2 of the stepped portion 34 is larger than the step H1 of the stepped portion 32 (H2 > H1). The vertical wall portion 38 that forms part of the stepped portion 34 is located farther away from the housing portion 23 than the vertical wall portion 36 that forms part of the stepped portion 32.

### Functions and Effects of Vehicle Underbody Structure

Next, the functions and effects of the vehicle underbody structure according to the present embodiment will be described.

In the vehicle 10 of FIG. 1 to which the vehicle underbody structure 12 of the present embodiment is applied, as shown in FIG. 2, each battery module 20 is configured by a plurality of battery cells 22. The battery cells 22 are arranged in the vehicle front-rear direction within each battery module 20, and the battery modules 20 are arranged in the vehicle width direction.

Accordingly, the battery cells 22 can be efficiently arranged in both the vehicle front-rear direction and the vehicle-width direction. In particular, since the battery cells 22 are arranged in the vehicle front-rear direction in each battery module 20, the number of battery cells 22 per row can be increased compared with a configuration in which the battery cells 22 are arranged in the vehicle width direction.

In the present embodiment, the battery pack 18 in which the battery cells 22 are accommodated includes the lower case 24 and the upper cover 26. The flange 25 formed at the outer edge of the side plates 24S of the lower case 24 and the flange 27 formed at the outer edge of the side plates 26S of the upper cover 26 are joined to each other at the joining region 29.

In the present embodiment, as shown in FIGS. 5 and 6, the flange 25 of the lower case 24 is formed with the stepped portion 32 that protrudes downward in the vehicle up-down direction and that defines the step H1 together with the flange 25. By forming the stepped portion 32 on the flange 25 of the lower case 24 in this manner, the adhesive 31 can be visually checked and adjusted during assembly.

In the present embodiment, the flange 27 of the upper cover 26 is formed with the stepped portion 34 that protrudes upward in the vehicle up-down direction and that defines the step H2 together with the flange 27. In the present embodiment, the adhesive 31 is retained between the stepped portion 32 of the lower case 24 and the stepped portion 34 of the upper cover 26. Accordingly, compared with a configuration in which flat surfaces are bonded together, spreading of the adhesive 31 is further suppressed and the adhesive 31 is more reliably retained at a predetermined location, thereby further improving the joining strength provided by the adhesive 31.

Furthermore, in the present embodiment, the stepped portion 32 includes the vertical wall portion 36 formed along the vehicle up-down direction on the side away from the housing portion 23, and the stepped portion 34 includes the vertical wall portion 38 formed along the vehicle up-down direction on the side away from the housing portion 23.

The stepped portion 34 is formed at a position facing the stepped portion 32 of the lower case 24. The step H2 of the stepped portion 34 is larger than the step H1 of the stepped portion 32 (H2 > H1).

Thus, in the present embodiment, the stepped portion 34 of the upper cover 26 has a larger step than the stepped portion 32 of the lower case 24. To join the upper cover 26 to the lower case 24, the stepped portion 34 is formed deeper than the stepped portion 32. This allows the adhesive 31 to be more reliably retained on the stepped portion 34.

Furthermore, in the present embodiment, the vertical wall portion 38 that forms part of the stepped portion 34 is located farther away from the housing portion 23 than the vertical wall portion 36 that forms part of the stepped portion 32. By positioning the vertical wall portion 38 of the upper cover 26 farther away from the housing portion 23 than the vertical wall portion 36 of the lower case 24, the bonding area of the stepped portion 34 can be made larger than that of the stepped portion 32.

When the upper cover 26 is joined to the lower case 24 during assembly, the adhesive 31 applied to the stepped portion 32 is pressed against the stepped portion 34. Even if the adhesive 31 spreads outward beyond the stepped portion 32, the vertical wall portion 38 of the stepped portion 34 suppresses such spreading of the adhesive 31, thereby reducing the likelihood of leakage of the adhesive 31 from the joining region 29.

In the present embodiment, the flange 25 of the lower case 24 and the flange 27 of the upper cover 26 are joined at the joining region 29. At the joining region 29, the flange 25 is formed with the stepped portion 32 protruding downward in the vehicle up-down direction, while the flange 27 is formed with the stepped portion 34 protruding upward in the vehicle up-down direction. That is, the lower case 24 and the upper cover 26 are respectively formed with the stepped portions 32, 34 that serve as protrusions. However, the present invention is not limited to this. For example, a protrusion may be provided on either the lower case 24 or the upper cover 26.

Although one embodiment of the present invention has been described above, the invention is not limited to the embodiment. The embodiment described above may be combined as appropriate with various modifications. The present invention may be carried out in various other forms without departing from the spirit and scope of the invention.

## Claims

1. A vehicle underbody structure (12) comprising a battery case (18) configured to be mounted on a lower portion of a vehicle (10), wherein:
the battery case (18) includes
a lower case (24) that has a housing portion (23) in which a battery module (20) is accommodated, and
an upper cover (26) that is joined to the lower case (24) and closes the housing portion (23);
the lower case (24) includes a first flange (25) provided at an outer edge of the lower case (24) and extending in a direction toward an outside of the housing portion (23);
the upper cover (26) includes a second flange (27) provided at an outer edge of the upper cover (26) and extending in a direction toward an outside of the housing portion (23), the second flange (27) being joined to the first flange (25) via a joining region (29); and
a protrusion (32, 34) configured to retain an adhesive (31) at the joining region (29) is provided on either or both of the first flange (25) and the second flange (27), the protrusion (32, 34) extending in a direction away from the housing portion (23) along a vehicle up-down direction.

2. The vehicle underbody structure (12) according to claim 1, wherein the protrusion (32) is provided on the lower case (24) as a first stepped portion protruding downward in the vehicle up-down direction and defining a first step (H1) between the first stepped portion and the first flange (25).

3. The vehicle underbody structure (12) according to claim 2, wherein the protrusion (34) is provided on the upper cover (26) as a second stepped portion that is provided at a position facing the first stepped portion, the second stepped portion protruding upward in the vehicle up-down direction and defining a second step (H2) between the second stepped portion and the second flange (27).

4. The vehicle underbody structure (12) according to claim 3, wherein the second step (H2) is larger than the first step (H1).

5. The vehicle underbody structure (12) according to claim 3, further comprising:
a first vertical wall portion (36) that is part of the first stepped portion (32) and is provided along the vehicle up-down direction on a side away from the housing portion (23); and
a second vertical wall portion (38) that is part of the second stepped portion (34) and is provided along the vehicle up-down direction on a side away from the housing portion (23),
wherein the second vertical wall portion (38) is located farther away from the housing portion (23) than the first vertical wall portion (36).
